# EUROPÄISCHE PATENTSCHRIFT

(11) **EP 0 722 894 B1**
(45) Veröffentlichungstag und Bekanntmachung des Hinweises auf die Patenterteilung: **02.12.1998**
(21) Anmeldenummer: 96100704.4
(22) Anmeldetag: 18.01.1996
(51) Int. Cl.: B65G 1/02

(54) **Regal**
Shelf
Rayonnage

(30) Priorität: 20.01.1995 DE 19501718
(43) Veröffentlichungstag der Anmeldung: 24.07.1996
(73) Patentinhaber: HÄNEL & CO., CH-9450 Altstätten SG (CH)
(72) Erfinder: Hänel, Gerhard, D-74177 Bad Friedrichshall (DE)
(74) Vertreter: Preissner, Nicolaus, Dipl.-Ing.

(56) Entgegenhaltungen:
- EP-A- 0 599 032
- CH-A- 258 251
- DE-A- 4 233 688
- DE-U- 8 908 868
- DE-U- 9 213 477
- GB-A- 1 289 101

## Beschreibung

Die Erfindung betrifft ein Regal mit einer Vielzahl von übereinanderliegenden und beabstandeten Trägerauflagen, die paarweise an sich gegenüberliegenden Seitenwänden zur Aufnahme von plattenförmigen Trägern für Lagergut angeordnet sind, wobei die Trägerauflagen als in die Seitenwände integrierte und eingeformte Auflagestege ausgebildet sind.

Derartige Regale sind bereits bekannt. In der CH-A-258251 ist ein Regal mit Seitenwänden offenbart, in die integrierte Trägerauflagen eingeformt sind. Dabei sind die Seitenwände mit einem durchgehenden wellenförmigen oder zackenförmigen Profil ausgebildet, wobei die dadurch erzeugten Vorsprünge zur Aufnahme von Zwischenböden, Schubladen und dergleichen dienen. Ein prinzipiell ähnliches Regal ist auch aus der GB-A 1 289 101 bekannt.

Derartige Regale kommen in Regalsystemen zum Einsatz, die beispielsweise zwei beabstandete Regaltürme mit einer zwischenliegenden Transportvorrichtung aufweisen, die eine verfahrbare Plattform besitzt.

Hierbei ist die Plattform zwischen einer Beschickungsstelle und den Regalpositionen verfahrbar. Bei derartigen Regalen kommen plattenförmige Träger zum Einsatz, die von übereinanderliegend angeordneten Trägerauflagen getragen werden, die paarweise an sich gegenüberliegenden Seitenwänden des Regals vorgesehen sind.

Bei anderen bekannten Regalen sind die Trägerauflagen als separate Stützschienen ausgebildet, die in an den Seitenwänden vorgesehenen Löchern eingehängt werden. Dies ist mit einem erhöhten Montageaufwand verbunden, da die Stützschienen manuell eingebracht und gegen Aushängen gesichert werden müssen. So sind beispielsweise bei einem Regal von 10m Höhe und einem Raster von 50mm 200 Stützschienenpaare notwendig, die montiert und gesichert werden müssen. Durch die einhängbaren Stützschienen kann es zu Montagefehlern kommen, beispielsweise dann, wenn Stützschienen nicht eingebaut werden. Derartige Montagefehler haben dann zwangsläufig Zustellfehler der steuerbaren Transporteinrichtung für die Lagergutträger zur Folge.

Ausgehend hiervon liegt der Erfindung die Aufgabe zugrunde, ein Regal vorzuschlagen, bei dem ein derartiger hoher Montageaufwand nicht auftritt und Montagefehler, die mit Zustellfehlern der steuerbaren Transporteinrichtung einhergehen, ausgeschlossen werden. Weiterhin soll ein problemloses Zuführen der Lagergutträger an die Lagerplätze gewährleistet werden.

Zur Lösung dieser Aufgabe ist erfindungsgemäß vorgesehen, daß im Bereich einer Beschickungsseite des Regals die Auflagestege einen sich in Vertikalrichtung verjüngenden Querschnitt aufweisen.

Durch die erfindungsgemäße Ausgestaltung ist das problemlose Zustellen der plattenförmigen Träger an die Trägerauflagen gewährleistet.

Vorteilhafte Ausgestaltungen der Erfindung ergeben sich aus den Unteransprüchen.

Vorteilhaft bestehen die Seitenwände aus einem Metallblech, insbesondere einem Stahlblech, in das die Auflagestege eingepreßt sind. Derartige Seitenwände mit integrierten Auflagestegen sind in einfacher Weise und kostengünstig herstellbar.

Zweckmäßig weisen die Seitenwände eine mäanderförmige Querschnittsform auf.

In weiterer Ausgestaltung wird vorgeschlagen, daß die Seitenwände im Randbereich mit beabstandeten vertikalen Regalständern, insbesondere in Buckelschweißtechnik, verschweißt sind.

Vorteilhaft weisen die plattenförmigen Träger eine dem Abstand der Auflagestege angepaßte Höhe auf. Hierdurch werden die Träger durch benachbarte Auflagestege an ihrer Ober- und Unterseite geführt.

In weiterer Ausgestaltung ist eine Höhenmeßeinrichtung für das Lagergut vorgesehen, die die Anzahl der für die Unterbringung des Lagerguts notwendigen Höheneinheiten ermittelt, wobei eine Höheneinheit den Abstand der Oberkanten benachbarter Auflagestege entspricht. Dadurch wird die Gefahr von Zustellfehlern weiter vermindert. Die Höhenmeßeinrichtung kann im Bereich der Beschickungsöffnung vorgesehen sein und eine Vielzahl von beabstandeten Lichtschranken aufweisen.

Eine vorteilhafte Ausführungsform der Erfindung ist auf ein Regalsystem gerichtet, das zwei erfindungsgemäße und beabstandete Regale aufweist, wobei eine zwischenliegende Transportvorrichtung mit höhenverstellbarer Plattform vorgesehen ist. Eine Stirnseite des einen Regals weist eine Entnahmeöffnung mit abkragenden, parallelen Auflagearmen für einen plattenförmigen Träger auf. Weiterhin besitzt das Regalsystem eine Höhenmeßeinrichtung für das Lagergut, deren Meßsignal einer Steuereinrichtung der Transporteinrichtung zugeführt wird, die abhängig von der Belegung des Regals und der Höhe des Lagergutes die plattenförmigen Träger verfährt und zustellt.

Nachfolgend wird die Erfindung anhand eines vorteilhaften Ausführungsbeispieles näher erläutert, das in schematischer Weise in der Zeichnung dargestellt ist. Hierin zeigen:
- Figur 1: eine perspektivische, teilweise geschnittene Ansicht eines erfindungsgemäßen Regalsystems und
- Figur 2: eine vergrößerte Darstellung der Einzelheit II gemäß Figur 1.

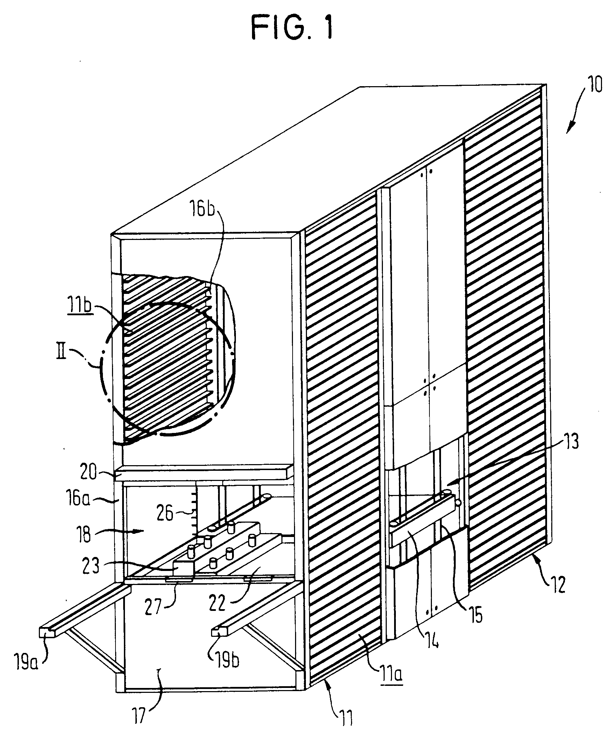

Figur 1 zeigt ein erfindungsgemäßes Regalsystem 10, das zwei mit Abstand zueinander angeordnete Regale 11, 12 aufweist. Zwischen den Regalen 11, 12 ist eine Transporteinrichtung 13 vorgesehen, die mit einer über Ketten 15 angetriebenen Plattform 14 ausgebildet ist. Die Regale 11, 12 weisen jeweils parallel zueinander ausgerichtete Seitenwände 11a, 11b auf, die an beabstandeten vertikalen Regalständern 16a, 16b festgelegt sind.

An einer Stirnseite 17 des Regales 11 ist eine Entnahmeöffnung 18 vorgesehen, an der parallel zueinander ausgerichtete, nach vorne abkragende Auflagearme 19a, 19b angeordnet sind.

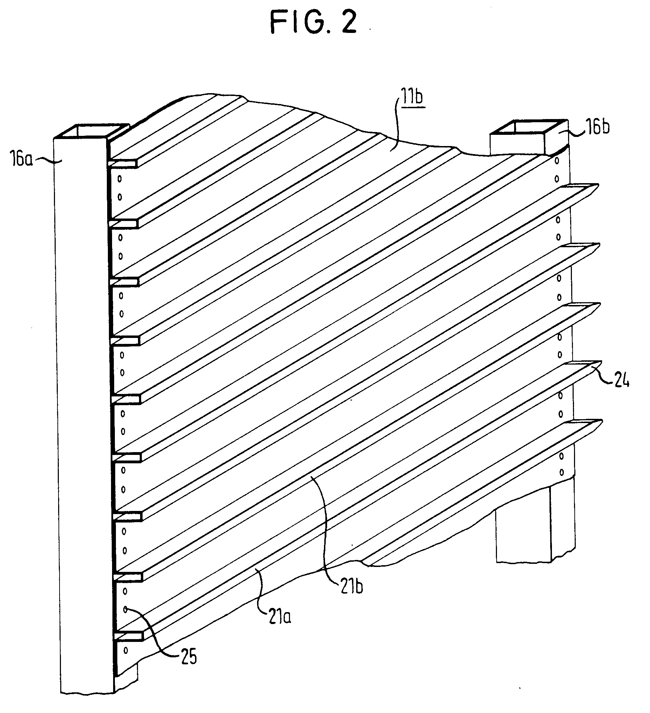

Figur 2 zeigt eine vergrößerte Darstellung der Einzelheit II gemäß Figur 1. Anhand dieser Figur soll die nähere Ausgestaltung der Seitenwände 11a, 11b der Regale 11, 12 erläutert werden. Die Seitenwände 11a, 11b bestehen bei der dargestellten Ausführungsform jeweils aus Stahlblech, in das nach innen gerichtete Auflagestege 21a, 21b eingepreßt sind. Somit weisen die Seitenwände 11a, 11b jeweils eine mäanderförmige Querschnittsform auf. Die an sich gegenüberliegenden Seitenwänden 11a, 11b paarweise angeordneten Auflagestege 21a, 21b dienen als Trägerauflage für plattenförmige Träger 22, auf denen das Lagergut 23 aufgenommen wird. Hierbei ist die Höhe des plattenförmigen Trägers 22 derart ausgelegt, daß eine Führung durch benachbarte Auflagestege 21a, 21b erzielt wird. Endseitig weisen die Auflagestege 21a, 21b eine Verjüngung 24 auf, um Toleranzen beim Anfahren mit der Plattform 14 auszugleichen. Die Verjüngung 24 wird beim Pressvorgang in die Seitenwand 11b eingeformt.

Die Seitenwände 11a, 11b sind mit den vertikalen Regalständern 16a, 16b beispielsweise über Buckelschweißtechnik verschweißt. Hierbei sind eine Vielzahl von Buckelschweißpunkten 25 zwischen den beabstandeten Auflagestegen 21a, 21b vorgesehen.

Durch die eingepreßten Auflagestege 21a, 21b wird eine Versteifung der Seitenwände 11a, 11b erzielt, so daß relativ dünne Stahlbleche eingesetzt werden können, wodurch eine Materialersparnis erreicht wird. Weiterhin kann der Abstand der Auflagestege 21a, 21b sehr gering gehalten werden, da im Gegensatz zu an Löchern einhängbaren separaten Stützschienen keine Schwächung der vertikalen Regalständer 16a, 16b auftritt.

Das Regalsystem 10 kann mit geringem Montageaufwand beim Kunden montiert werden, da die Seitenwände 11a, 11b bereits die integrierten Auflagestege 21a, 21b aufweisen. Das Einhängen und Sichern von separaten Stützschienen in hierfür vorgesehen Löcher an den Regalständern entfällt.

An der Stirnseite 17 des Regales 11 ist im Bereich der Entnahmeöffnung 18 eine Beleuchtung 20 vorgesehen. Im Inneren des Regales 11 ist eine Höhenmeßeinrichtung 26 angeordnet, die mit einer Vielzahl von beabstandeten Lichtschranken ausgebildet ist. Hierdurch kann die Höhe des auf dem Träger 22 angeordneten Lagergutes 23 erfaßt werden. Der Abstand der Lichtschranken entspricht dabei dem Abstand der in den Seitenwänden 11a, 11b angeordneten Auflagestege 21a, 21b.

Die Höhenmeßeinrichtung 26 ist mit einer Steuereinrichtung für die Transporteinrichtung 13 gekoppelt. Falls die Höhenmeßeinrichtung 26 kein Lagergut 23 auf dem jeweiligen Träger 22 erfaßt, wird in dem jeweiligen Regal 11, 12 jeweils lediglich eine Höheneinheit belegt. Hierbei entspricht eine Höheneinheit dem Abstand von Oberkante zu Oberkante benachbarter Auflagestege 21a, 21b. Falls die unterste Lichtschranke der Höhenmeßeinrichtung 26 lediglich das Lagergut 23 erfaßt, werden zwei Höheneinheiten belegt. Die Belegung der Höheneinheiten in den Regalen 11,12 wird derart gesteuert, daß eine möglichst lückenlose Belegung der Regale 11, 12 erzielt wird. Hierbei kommt ein in der Steuereinrichtung der Transporteinrichtung 13 vorgesehenes, die Belegung überwachendes Mikroprozessor-Speichersystem zum Einsatz. Dieses optimiert die Belegung derart, daß eine möglichst lückenlose Belegung erzielt wird. Die Minimalisierung an Lücken wird dabei durch den Mikroprozessor in mehreren Suchschritten berechnet, wie dies prinzipiell in der computergesteuerten Lagertechnik bekannt ist.

Zur Verbesserung der Gleiteigenschaften sind die plattenförmigen Träger 22 mit nicht dargestellten speziellen Kunststoffgleitern versehen. Aus Stabilitätsgründen weisen die Träger 22 ca. 20 mm breitprofilierte Wände auf, die breiter als die Auflagestege 21a, 21b sind und an denen allseitig von innen Rasterstanzungen angebracht werden, die der Einlage von verstellbaren Unterteilungen dienen. Weiterhin sind an den Trägern 22 beabstandete Handgriffe 27 vorgesehen.

Weiterhin weist das Regalsystem 10 eine nicht näher dargestellte Ein-und Ausschiebeeinheit auf, mit der die plattenförmigen Träger 22 zwischen der Beschikkungsstelle und einem Lagerort in den Regalen 11, 13 hin und her bewegt werden kann. Das Lagergut 23 kann dabei über die Beschickungsstelle ein- oder ausgelagert werden. Weiterhin ist es aber auch möglich, daß die plattenförmigen Träger im Bereich der Entnahmeöffnung 18 auf die Auflagearme 19a, 19b ausgezogen werden kann.

## Patentansprüche

1. Regal mit einer Vielzahl von übereinanderliegenden und beabstandeten Trägerauflagen, die paarweise an sich gegenüberliegenden Seitenwänden (11a, 11b) zur Aufnahme von plattenförmigen Trägern (22) für Lagergut (23) angeordnet sind, wobei die Trägerauflagen als in die Seitenwände (11a, 11b) integrierte und eingeformte Auflagestege (21a, 21b) ausgebildet sind, dadurch gekennzeichnet, daß im Bereich einer Beschickungsseite des Regals (11, 12) die Auflagestege (21a, 21b) einen sich in Vertikalrichtung verjüngenden Querschnitt aufweisen.

2. Regal nach Anspruch 1, dadurch gekennzeichnet, daß die Seitenwände (11a, 11b) aus einem Metallblech, insbesondere Stahlblech, bestehen, in das die Auflagestege (21a, 21b) eingepreßt sind.

3. Regal nach Anspruch 1 oder 2, dadurch gekennzeichnet, daß die Seitenwände (11a, 11b) eine mäanderförmige Querschnittsform aufweisen.

4. Regal nach einem oder mehreren der Ansprüche 1 bis 3, dadurch gekennzeichnet, daß die Seitenwände (11a, 11b) im Randbereich mit beabstandeten vertikalen Regalständern (16a, 16b), insbesondere in Buckelschweißtechnik, verschweißt sind.

5. Regal nach einem der Ansprüche 1 bis 4, dadurch gekennzeichnet, daß die plattenförmigen Träger (22) eine den Abstand der Auflagestege (21a, 21b) angepaßte Höhe aufweisen.

6. Regal nach einem der Ansprüche 1 bis 5, dadurch gekennzeichnet, daß eine Höhenmeßeinrichtung (26) für das Lagergut (23) vorgesehen ist, die die Anzahl der für die Unterbringung des Lagergutes (23) notwendigen Höheneinheiten ermittelt, wobei eine Höheneinheit dem Abstand der Oberkanten benachbarter Auflagestege (21a, 21b) entspricht.

7. Regalsysteme unter Verwendung eines Regales (11, 12) nach einem oder mehreren der Ansprüche 1 bis 6, dadurch gekennzeichnet, daß zwei beabstandete Regale (11, 12) mit einer zwischenliegenden Transporteinrichtung (13) mit höhenverstellbarer Plattform (14) vorgesehen sind, daß eine Stirnseite (17) des einen Regales (11) eine Entnahmeöffnung (18) mit abkragenden, parallelen Auflagearmen (19a, 19b) für einen plattenförmigen Träger (22) aufweist, und daß eine Höhenmeßeinrichtung (26) für das Lagergut (23) vorgesehen ist, deren Meßsignal einer Steuereinrichtung der Transporteinrichtung (13) zugeführt wird, die abhängig von der Belegung des Regales und der Höhe des Lagergutes (23) die plattenförmigen Träger (22) verfährt und zustellt.

## Claims

1. A shelving comprising a plurality of carrier supports located spaced one above the other, arranged in pairs on opposing side walls (11a, 11b) for receiving plate-type carriers (22) for storage items (23) said carrier supports being configured integrated in said side walls (11a, 11b) as formed supporting edges (21a, 21b), characterized in that in the region of one feed side of said shelving (11, 12) said supporting edges (21a, 21b) comprise a vertically tapered cross-section.

2. The shelving as set forth in claim 1, characterized in that said side walls (11a, 11b) consist of a metal plate, more particularly a steel plate, in which said supporting ledges (21a, 21b) are impressed.

3. The shelving as set forth in claim 1 or 2, characterized in that said side walls (11a, 11b) comprise a meander-type cross-sectional shape.

4. The shelving as set forth in any of the claims 1 to 3, characterized in that said side walls (11a, 11b) are welded, more particularly projection welded, in the rim region to vertical shelving shelving uprights (16a, 16b).

5. The shelving as set forth in any of the claims 1 to 4, characterized in that said plate-type carriers (22) have a height being matched to the spacing of said supporting edges (21a, 21b).

6. The shelving as set forth in any of the claims 1 to 5, characterized in that a height sensing means is provided for said storage items (23) which senses the number of height units necessary to accommodate said storage item (23), a height unit corresponding to the spacing of the top edges of said adjacent supporting edges (21a, 21b).

7. A shelving system employing a shelving (11, 12) as set forth in any of the claims 1 to 6, characterized in that two shelvings (11, 12) are provided spaced away from each other, provided inbetween with a transport device (13) having a vertically displaceable platform (14), one face side (17) of said one shelving (11) comprising a retrieval opening (18) incorporating cantilevered, parallel supporting arms (19a, 19b) for a plate-type carrier (22) and that a height sensing means (26) is provided for said storage items (23), the sensing signal of which is fed to a controller for said transport device (13) which travels and feeds said plate-type carrier (22) as a function of the occupied status of said shelving and the height of said storage item (23).

## Revendications

1. Rayonnage comprenant une pluralité d'éléments d'appui disposés les uns au-dessus des autres et écartés, qui sont agencées par paires sur des parois latérales opposées (11a, 11b) afin de recevoir des supports en forme de plaque (22) destinés à des produits à entreposer (23), lesdits éléments de support étant réalisés sous forme de barrettes d'appui (21a, 21b) intégrées et formées dans les parois latérales (11a, 11b), caractérisé en ce que dans la région du côté de chargement du rayonnage (11, 12), les barrettes d'appui (21a, 21b) présentent une section qui va en se rétrécissant en direction verticale.

2. Rayonnage selon la revendication 1, caractérisé en ce que les parois latérales (11a, 11b) sont réalisées en tôle métallique, en particulier en tôle d'acier, dans laquelle les barrettes d'appui (21a, 21b) sont réalisées à la presse.

3. Rayonnage selon l'une ou l'autre des revendications 1 et 2, caractérisé en ce que les parois latérales (11a, 11b) présentent une section transversale en forme de méandres.

4. Rayonnage selon l'une ou plusieurs des revendications 1 à 3, caractérisé en ce que les parois latérales (11a, 11b) sont soudées dans la région de bordure, avec des poteaux de rayonnages verticaux écartés (16a, 16b), en particulier par la technique de soudure dite "à bossages".

5. Rayonnage selon l'une des revendications 1 à 4, caractérisé en ce que les supports en forme de plaque (22) présentent une hauteur adaptée à la distance des barrettes d'appui (21a, 21b).

6. Rayonnage selon l'une des revendications 1 à 5, caractérisé en ce qu'il est prévu un dispositif de mesure de hauteur (26) pour les produits à entreposer (23), qui détermine le nombre d'unités de hauteur nécessaires pour recevoir les produits à entreposer (23), une unité de hauteur correspondant à la distance entre les arêtes supérieures de barrettes d'appui voisines (21a, 21b).

7. Système de rayonnage utilisant un rayonnage (11, 12) selon l'une ou plusieurs des revendications 1 à 6, caractérisé en ce qu'il est prévu deux rayonnages écartés (11, 12) avec un dispositif de transport interposé (13) qui comprend une plate-forme (14) mobile en hauteur, en ce qu'une face frontale (17) de l'un des rayonnages (11) comporte une ouverture de prélèvement (18) avec des bras d'appui parallèles en porte-à-faux (19a, 19b) pour un support en forme de plaque (22), et en ce qu'il est prévu un dispositif de mesure de hauteur (26) pour les produits à entreposer (23), dont le signal de mesure est amené à un dispositif de commande pour le dispositif de transport (13), lequel déplace et présente le support forme de plaque (23) en fonction de l'occupation du rayonnage et de la hauteur des produits à entreposer (23).
